# EUROPEAN PATENT APPLICATION

(11) **EP 2 720 115 A2**
(43) Date of publication of application: **16.04.2014**
(21) Application number: 13186959.6
(22) Date of filing: 01.10.2013
(51) Int. Cl.: G06F 3/01, G06F 3/03

(54) **Transparent display apparatus and controlling method thereof**

(30) Priority: 09.10.2012 KR 20120112014
(71) Applicant: Samsung Electronics Co., Ltd, Gyeonggi-do 443-742 (KR)
(72) Inventor: Ryu, So-hyun, Gyeonggi-do (KR)
(74) Representative: Taor, Simon Edward William

(57) **Abstract**

A transparent display apparatus includes a transparent display which displays a virtual object, a first detector which detects a position of a real object placed in a first direction from the transparent display, a second detector which detects a position of a user in a second direction from the transparent display, and a controller which estimates distances of the real object and the virtual object with respect to the position of the user, and an overlapping area of the real object and the virtual object on the transparent display with respect to the position of the user based on the detected position of the real object, the detected position of the user and the position of the virtual object. The controller controls the transparent display to display the virtual object on the overlapping area based on the distances of the real object and the virtual object regarding the user position.

## Description

Apparatuses and methods consistent with what is disclosed herein relate to a transparent display apparatus and a controlling method thereof, and more specifically, to a transparent display apparatus displaying 3D virtual objects and a controlling method thereof.

Development of electronic technologies has enabled introduction of various types of display apparatuses in various fields. Particularly, recent research regarding next-generation display apparatuses such as transparent display apparatuses have increasingly been discussed.

A 'transparent display apparatus' refers to an apparatus having transparent property that enables one to see things at the back there through. Conventionally, non-transparent semiconductor compounds such as Si or GaAs are used in manufacturing a display panel. However, as various applied fields are developed that conventional displays may not be sufficient, efforts in developing new type of electronic components have been made. One of the results from developing efforts is a transparent display apparatus.

A transparent display apparatus is implemented by including transparent oxide semiconductor layers which confers transparent properties. Thus, if a transparent display apparatus is used, a user can view both the screen provided from a transparent display apparatus and the real objects placed at the back of the apparatus.

A transparent display apparatus can be used conveniently in various methods and various environments. For instance, if shop window is manufactured with a transparent display, the shop window may display advertising or clothes so that mannequins standing at the back seem to wear clothes. Thus, the transparent display may be utilized as reality-strengthening display apparatus harmonizing and displaying virtual objects with real objects.

Compared to conventional display apparatuses, a transparent display apparatus has many advantages because of transparency while having problems occurred from transparency. Specifically, because virtual objects are displayed with real objects, the reality of the displayed virtual objects on a transparent display apparatus may be seldom delivered.

Exemplary embodiments of the present disclosure overcome the above disadvantages and other disadvantages not described above. Also, the present disclosure is not required to overcome the disadvantages described above, and an exemplary embodiment of the present disclosure may not overcome any of the problems described above.

The disclosure is suggested for the necessity described above, and the aspect is to provide a transparent display apparatus displaying virtual objects with more reality and a controlling method thereof.

Additional aspects and/or advantages will be set forth in part in the description which follows and, in part, will be apparent from the description, or may be learned by practice of the disclosure.

According to an embodiment, a transparent display apparatus is provided, which may include a transparent display which displays a virtual object having a predetermined position on a virtual dimensional area, a first detector which detects position of a real object placed in a first direction from the transparent display, a second detector which detects position of a user in a second direction from the transparent display, and a controller which estimates distances of the real object and the virtual object with respect to the position of the user, and an overlapping area of the real object and the virtual object on the transparent display with respect to the position of the user based on the detected position of the real object, the detected position of the user and the predetermined position of the virtual object. The controller may control the transparent display to display the virtual object on the overlapping area based on the distances of the real object and the virtual object regarding the position of the user.

The controller may display the virtual object on the overlapping area, if the distance of the virtual object regarding the position of the user is closer than the distance of the real object regarding the position of the user, and may not display the virtual object on the overlapping area, if the distance of the virtual object regarding the position of the user is longer than the distance of the real object regarding the position of the user. The virtual object may be displayed non-transparently so as not to penetrate the real object on the transparent display.

The controller may estimate an area that the real object penetrates and shows on the transparent display with respect to the position of the user by utilizing the position of the user and the position of the real object, estimate an area in which the virtual object displays on the transparent display by utilizing the position of the user and the predetermined position of the virtual object, and estimate the overlapping area.

The second detector may detect coordinate information of the user's eyes as the position of the user.

The virtual object displayed on the transparent display may be a three-dimensional (3D) virtual object.

In one embodiment, a method of controlling a transparent display apparatus displaying a virtual object having a predetermined position on a virtual dimensional area is provided, which may include detecting position of a real object placed in a first direction from the transparent display, and position of a user in a second direction from the transparent display, estimating distances of the real object and the virtual object with respect to the position of the user and an overlapping area of the real object and the virtual object on the transparent display from the position of the user based on the detected position of the real object, the detected position of the user and the predetermined position of the virtual object, determining as to whether or not to display the virtual object on the overlapping area based on the distances of the real object and the virtual object with respect to the position of the user, and displaying the virtual object based on the determination results.

The determining may include determining to display the virtual object on the overlapping area, if the distance of the virtual object regarding the position of the user is closer than the distance of the real object regarding the position of the user, and determining not to display the virtual object on the overlapping area, if the distance of the virtual object regarding the position of the user is longer than the distance of the real object regarding the position of the user.

The virtual object may be displayed non-transparently so as not to penetrate the real object on the transparent display.

The estimating the overlapping area of the real object and the virtual object may include estimating an area in which the real object penetrates and shows on the transparent display from the position of the user by utilizing the position of the user and the position of the real object, estimating an area in which the virtual object displays on the transparent display by utilizing the position of the user and predetermined position of the virtual object, and estimating the overlapping area based on the area in which the real object penetrates and the area the virtual object is to be displayed.

The detecting the position of the user may include detecting coordinate information of user's eyes as the position of the user.

The virtual object displayed on the transparent display may be a three dimensional (3D) virtual object.

Therefore, according to the various embodiments, a virtual object displayed on a transparent display apparatus may have more reality.

The above and/or other aspects of the present disclosure will be more apparent by describing certain exemplary embodiments of the present disclosure with reference to the accompanying drawings, in which:
FIG. 1 is a view provided to explain operations of a transparent display apparatus according to an embodiment;
FIG. 2 is a block diagram of a transparent display apparatus according to an embodiment;
FIG. 3 illustrates detailed constitution of a transparent display implemented in transparent OLED type;
FIGS. 4A and 4B are views provided to explain a method of estimating area in which real objects penetrate and show on a transparent display apparatus;
FIGS. 5A and 5B are views provided to explain a method of estimating area in which virtual objects are displayed on a transparent display apparatus;
FIG. 6 is a view provided to explain a method of estimating area in which real objects and virtual objects overlap on a transparent display apparatus;
FIG. 7 illustrates a display screen in which virtual objects are displayed according to an embodiment; and
FIG. 8 is a flowchart provided to explain a controlling method of a transparent display apparatus according to an embodiment.

Certain exemplary embodiments of the present disclosure will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present disclosure. Accordingly, it is apparent that the exemplary embodiments of the present disclosure can be carried out without those specifically defined matters. Also, well-known functions or constructions are not described in detail since they would obscure the invention with unnecessary detail.

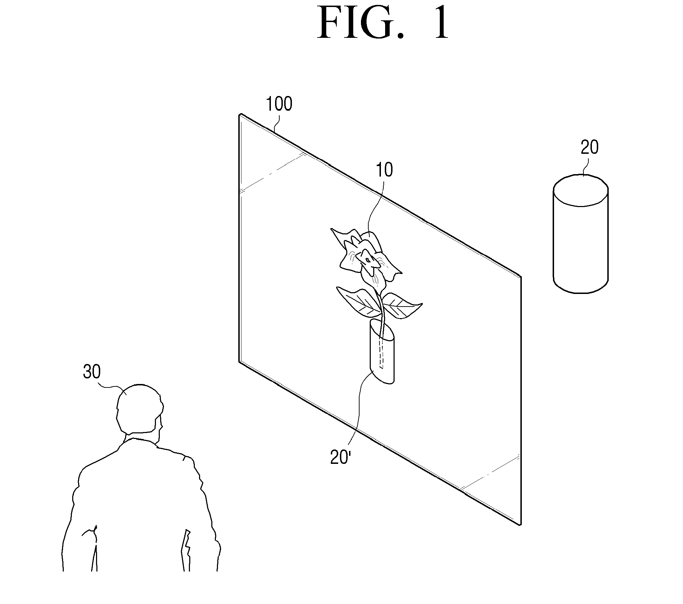

FIG. 1 is a view provided to explain operations of a transparent display apparatus according to an embodiment. Referring to FIG. 1, the transparent display apparatus 100 may display a virtual object 10 on display screen. The 'virtual objects' as used herein may refer to every object that can be displayed on a display screen, for instance, objects such as plants or furniture as well as texts or backgrounds.

Meanwhile, the transparent display apparatus 100 may be implemented to be transparent display screen, and a real object 20 may be shown on the transparent display apparatus. Referring to FIG. 1, if the real object 20 is placed in a first direction based on the transparent apparatus 100 and a user 30 is in a second direction opposite to the first direction, the user 30 may view the real object 20 on the opposite side through the transparent apparatus 100.

Thus, the transparent display apparatus 100 may display the virtual object 10 by considering the real object 20 at the back. For instance, the transparent display apparatus 100 may display information regarding commodities placed at the back. Further, if there is a flower vase 20 as the real object like in the example illustrated in FIG. 1, the transparent display apparatus 100 may display flower 10 as a virtual object so that the flower 10 is displayed as being placed in the flower vase 20.

However, due to such property of the transparent display apparatus 100, the virtual object 10 displayed on the transparent display apparatus 100 may overlap with the real object at the back, or, the virtual object 10 may cover the real object 20, thus degrading reality. For instance, referring to FIG. 1, if displaying the flower 10 as virtual in the flower vase 20 as real, the flower 10 as virtual may be displayed to overlap the flower vase 20 as real. Further, if the flower 10 as virtual is displayed non-transparently, it may be viewed that the flower 10 is out of the flower vase 20.

Thus, the transparent display apparatus 100 may differently display the overlapping area when displaying a virtual object according to comparative distance of real and virtual objects from a user position.

Specifically, the transparent display apparatus 100 may recognize position of the real object 20 placed in a first direction and position of the user 10 placed in a second direction. A virtual object may have a predetermined position on a virtual dimensional area which can be inputted by a user with specific applications or software or determined automatically.

The transparent display apparatus 100 may estimate an area in which a real object shows through, and an area in which a virtual object is displayed, by using positions of a user, a real object, and a virtual object to, and estimate overlapping area of the real object and the virtual object. Thus, regarding the estimated overlapping area, if a virtual object is placed longer than a real object from a user position, the transparent display apparatus 100 may not display a virtual object. If a virtual object is placed closer than a real object, the transparent display apparatus 100 may display a virtual object non-transparently and show the virtual object with more reality.

For convenience of explanation, a second direction based on the screen of the transparent display apparatus 100, i.e., the user side is defined as a front direction, and a first direction, i.e., the direction opposite to the user is defined as a rear direction.

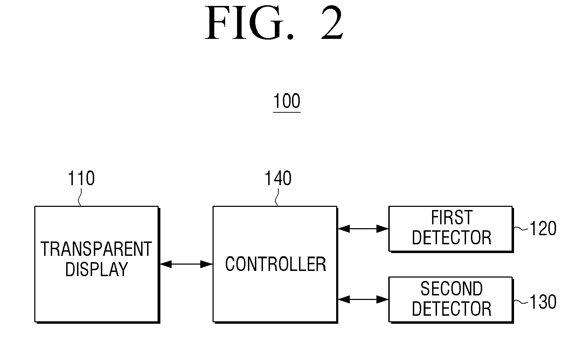

FIG. 2 is a block diagram of a transparent display apparatus according to an embodiment. Referring to FIG. 2, the transparent display apparatus 100 may include a transparent display 110, a first detector 120, a second detector 130, and a controller 140.

The transparent display 110 may display a virtual object. Virtual objects have a predetermined position on a virtual dimensional area. Positions of virtual objects may be inputted by a user with specific applications or software, or determined automatically.

For instance, in an interior of clothes shop, i.e., in a rear of a transparent display apparatus may stand a mannequin. A transparent display apparatus may display new clothes and a user can view it from an exterior of clothes shop, i.e., from the front of a transparent display apparatus. At this moment, if mannequin position is detected and displayed on the virtual dimensional area through applications or software, a user may manipulate virtual clothes having predetermined shapes so that a mannequin seems to wear virtual clothes on the virtual dimensional area, and thus, clothes position on the virtual dimensional area may be calculated. Further, if a position of a mannequin as a real object changes, a virtual position of clothes as the virtual object may change as calculated according to the changed position of a mannequin.

Meanwhile, the transparent display apparatus 100 may display virtual objects on an overlapping area based on distances of real and virtual objects regarding a user position according to controlling of the controller 140.

Specifically, the transparent display 110 may display a virtual object on an overlapping area if a distance of the virtual object is closer than distance of a real object from a user position, and may not display the virtual object on an overlapping area if distance of the virtual object is longer than distance of the real object from a user position. Thus, a user may recognize the virtual object with the real object displayed on the transparent display 110 with reality.

Meanwhile, the transparent display 110 may be implemented as various types such as Liquid Crystal Display (LCD) type, transparent Thin-Film Electroluminescent Panel (TFEL) type, transparent OLED type, or penetrating type. In the following, structure of the transparent display 110 according to various embodiments will be explained.

The "transparent LCD type" as used herein indicates a transparent display apparatus in which backlight units are omitted from a currently-used LCD apparatus, where a pair of polarized substrates, optical films, transparent thin film transistors, or transparent electrodes are used. The transparent LCD apparatuses may have a lower transmittance compared to polarized substrates or optical films, and lower light efficiency because ambient light is used instead of backlight units. However, it may have an advantage in implementing a wide-facing transparent display. The "transparent TFEL type" as used herein indicates an apparatus using transparent electrodes, inorganic fluorescent materials, and alternating inorganic thin film EL display (AC-TFEL) consisting of insulating films. AC-TFEL is a display in which accelerated electrons pass through interior of inorganic fluorescent materials to excite fluorescent materials, thus generating lights. If the transparent display 110 is implemented as transparent TFEL type, the controller 130 may adjust so that electrons are transmitted toward proper places, and determine position of placing information. Because inorganic fluorescent objects and insulating films have transparency, a highly transparent display may be implemented.

Additionally, the "transparent OLED type" indicates a transparent display apparatus using OLED which is self-illuminating. Because an organic light-emitting layer is transparent, if both electrodes are used as transparent electrodes, a transparent display apparatus may be implemented. OLED may generate lights by injecting electrons and holes from both sides of organic light-emitting layer, according to which the electrons and holes are coupled to generate light within organic light-emitting layer. A transparent OLED apparatus may use the above principle, inject electrons and holes toward determined positions and display information.

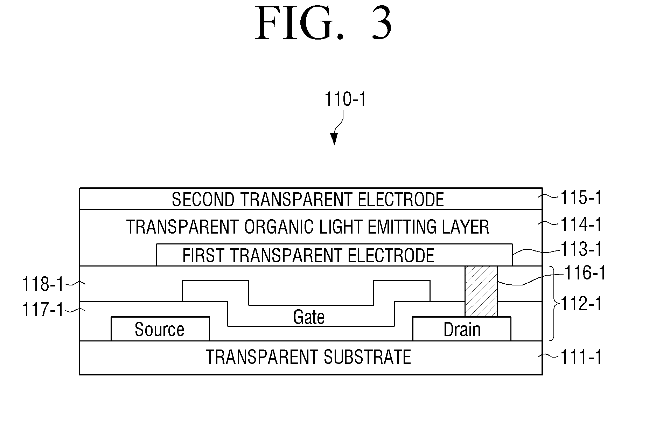

FIG. 3 illustrates detailed constitution of a transparent display implemented as transparent OLED type. For convenient explanation, 110-1 indicates a transparent display implemented as a transparent OLED (Organic Light-Emitting Diodes) type.

Referring to FIG. 3, the transparent display 110-1 may include a transparent substrate 111-1, a transparent transistor layer 112-1, a first transparent electrode 113-1, a transparent organic light-emitting layer 114-1, a second transparent electrode 115-1, and a connecting electrode 116-1.

The transparent substrate 111-1 may use polymer materials having transparent properties such as plastic or glasses. Material of the transparent substrate 111-1 may be determined according to use environment applied with the transparent display apparatus 100. For instance, because polymer materials have advantages in being light-weight and flexible, it may be utilized in mobile display apparatuses. Glasses may be used in show windows of shops or other windows.

The transparent transistor layer 112-1 indicates a layer including a transistor manufactured by substituting non-transparent silicon with transparent materials such as zinc oxide or titanium oxide. Within the transparent transistor layer 112-1, a source, a gate, a drain and several types of conductive films 117-1, 118-1 may be formed, and further, the connecting electrode 116-1 electrically connecting the drain and the first transparent electrode 113-1 may also be formed. Although FIG. 3 illustrates one transparent transistor including a source, a gate and a drain, in actual implementation, there may be a plurality of transparent transistors regularly distributed on a whole area of a display surface may also be installed for implementation. The controller 140 may allow controlling signals to be applied to the gates of the respective transistors within the transparent transistor layer 112-1, and drive a corresponding transparent transistor to display information.

The first transparent electrode 113-1 and the second transparent electrode 115-1 may be placed on both opposite sides based on the transparent organic light-emitting layer 114-1. The first transparent electrode, the transparent organic light-emitting layer and the second transparent electrode 113-1, 114-1, 115-1 may constitute transparent organic light-emitting diodes.

Transparent organic light-emitting diodes may be largely classified into passive matrix OLED (PMOLED) and active matrix OLED (AMOLED). PMOLED is a structure wherein crossing parts of the first transparent electrode 113-1 and the second transparent electrode 115-1 form pixels. Meanwhile, AMOLED is a structure wherein thin film transistors (TFT) driving each of pixels are placed. FIG. 3 illustrates AMOLED.

The first transparent electrode 113-1 and the second transparent electrode 115-2 may have a plurality of line electrodes, and arranging direction of the line electrodes may be formed orthogonally to each other. For instance, if line electrodes of the first transparent electrode 113-1 are arranged horizontally, line electrodes of the second transparent electrodes 115-1 may be arranged vertically. Thus, between the first transparent electrode 113-1 and the second transparent electrode 115-1, a plurality of crossing areas may be formed. Referring to FIG. 3, in each crossing area, a transparent transistor may be connected.

The controller 140 may use a transparent transistor to generate potential difference in each crossing area. Within crossing areas wherein potential difference is formed, electrons and holes from each electrode are injected and combined to emit lights. Meanwhile, in crossing areas wherein potential difference is not formed, light-emitting may not be implemented, and the things at the back may be shown transparently.

The first transparent electrode 113-1 and the second transparent electrode 115-1 may use indium tin oxide (ITO). Alternatively, new materials such as graphene may be used. Graphene is a material having transparency wherein carbon atoms are connected to each other and show beehive-shaped planar structure. Additionally, the transparent organic light-emitting layer 114-1 may be implemented with various materials.

Meanwhile, as described above, the transparent display 110 may be implemented as penetrating type as well as a Liquid Crystal Display (LCD) type, transparent Thin-Film Electroluminescent Panel (TFEL) type, and transparent OLED type. The penetrating type employs a method of projecting and displaying image on transparent screen such as Head Up Display (HUD).

The first detector 120 may detect position of real objects placed in a first direction of the transparent display apparatus 100. Specifically, the first detector 120 may detect position of real objects by calculating a three-dimensional (3D) coordinate of the position where real objects are placed on 3D area. Several methods of detecting the object position on a 3D area are already known in the art, which will not be further described herein for the sake of brevity. For instance, the first detector 120 may be implemented as a 3D camera using a plurality of photographing positions, detect a real object position by a triangulation method or by using a light sensor and light intensity reflected from real objects.

The second detector 130 may detect the position of a user standing on a second direction of the transparent display apparatus 100. The second detector 130 may detect position of a user on a 3D area with a similar method of the first detector 120. Specifically, the second detector 130 may detect the coordinate information of the user's eyes to be the position of a user. The second detector 130 may include a photographing apparatus such as an IR camera to recognize the position of the user's eyes.

The second detector 130 may be implemented to be an interior part of the transparent display apparatus 100. However, it may also be separated from the transparent display apparatus 100, i.e., to be an exterior part that a user can wear. Methods of detecting position of a user or the user's eyes on 3D area are already known in the art, which will not be further described.

The controller 140 may estimate distances of real and virtual objects from position of a user based on real object position, user position, and predetermined position of virtual objects detected by the first detector 120 and the second detector 130.

Specifically, the controller 140 may calculate distance from the position of the user's eyes on a 3D area to be dimensions of real and virtual objects on the 3D area.

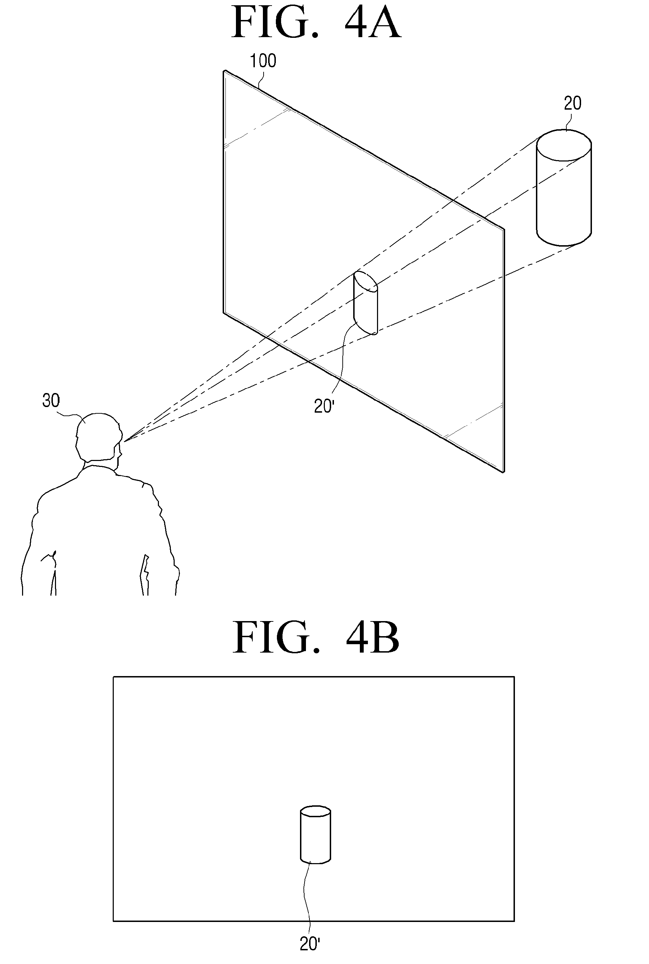

Further, the controller 140 may estimate overlapping areas of real and virtual objects on the transparent display 110 from the position of the user's eyes. Specifically, the controller 140 may estimate area where real objects penetrate and show on the transparent display 110 by using positions of a user and real objects, and estimate the area where virtual objects show on the transparent display 110 by using the position of a user and the predetermined position of virtual objects. Based on areas where real and virtual objects penetrate and show, the controller 140 may estimate the overlapping area. A method of estimating overlapping area of real and virtual objects will be further described below by referring to FIGS. 4 to 6.

FIGS. 4A and 4B are views provided to explain a method of estimating area where a real object penetrates and shows on a transparent display apparatus. Referring to FIG. 4A, a user 30 is at the front of a transparent display apparatus 100 and a real object 20 is placed at the rear of the transparent display apparatus 100. Thus, the real object 20 may penetrate through the transparent display apparatus 100 and be shown to the user 30.

Position of the real object 20 on the 3D area, position of the user 30, and position of the transparent display 100 should be recognized in order to estimate an area 20' where the real object 20 penetrates on the transparent display 100. Since the controller 140 already recognizes predetermined position of the first detector 120 or the second detector 130, size of a transparent display, position of a user and relative distance from a real object, it is possible to calculate the position of the transparent display apparatus 100 on the 3D area. Further, since the controller 140 may use positions of a real object and a user detected by the first detector 120 and the second detector 130, it is possible to estimate an area 20' where a real object penetrates and shows on a display as illustrated in FIG. 4A. If the user 30 views the transparent display apparatus 100, a real object 20' penetrated through the transparent display apparatus 100 may be displayed as illustrated in FIG. 4B.

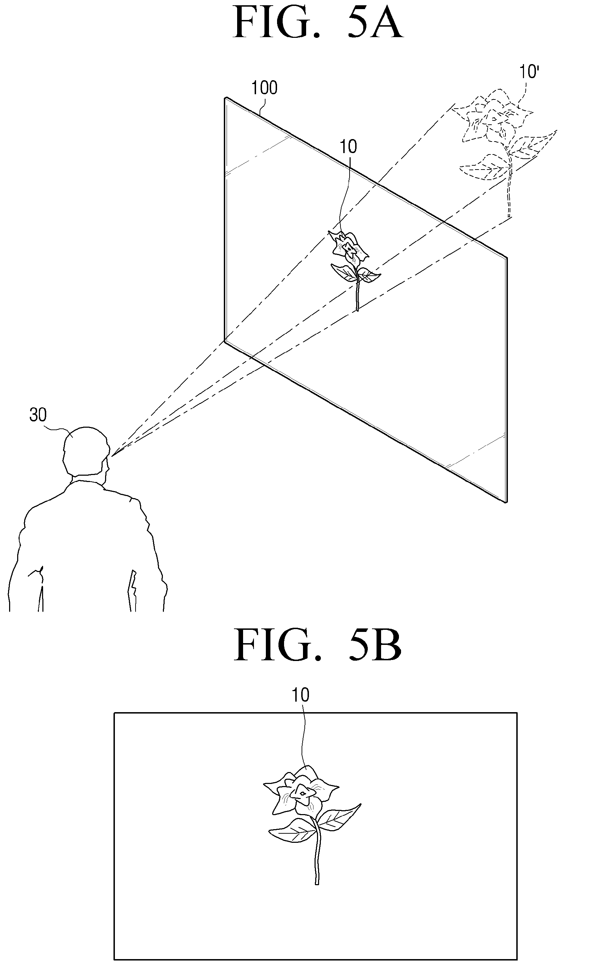

FIGS. 5A and 5B are views provided to explain a method of estimating an area where a virtual object shows on a transparent display apparatus. Referring to FIG. 5A, a user 30 is at the front of a transparent display apparatus 100, and a virtual object 10' having virtual position on a 3D area is placed at the rear of the transparent display apparatus 100.

Position of the virtual object 10' on the 3D area, position of the user 30, and position of the transparent display apparatus 100 should be recognized in order to estimate an area 10 where the virtual object 10' having predetermined position on the 3D area shows on the transparent display apparatus 100. As described above, since the transparent controller 140 already recognizes the predetermined position of the first detector 120 or the second detector 130, size of a transparent display, position of a user and relative distance from a real object, it is possible to calculate position of the transparent display apparatus 100 on the 3D area. Further, since the controller 140 recognizes the position of a user measured by the second detector 130 and the predetermined position of a virtual object, it is possible to estimate the area 10 where a virtual object shows on a display as illustrated in FIG. 5A. If the user 30 views the transparent display apparatus 100, the virtual object 10 on the transparent display apparatus 100 may be shown as illustrated in FIG. 5B.

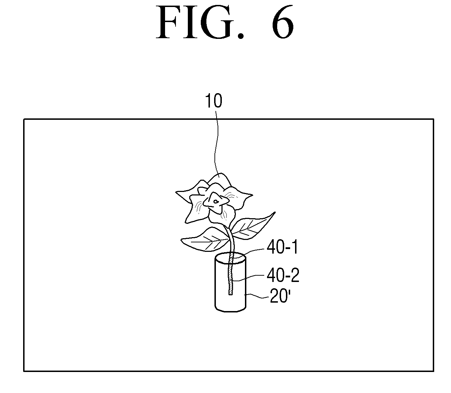

FIG. 6 is a view provided to explain a method of estimating an overlapping area of a real object and a virtual object on a transparent display apparatus. If an area penetrating and showing a real object and an area showing a virtual object are estimated, the transparent display apparatus 100 may calculate overlapping areas 40-1, 40-2 of the estimated real object area and the estimated virtual object area.

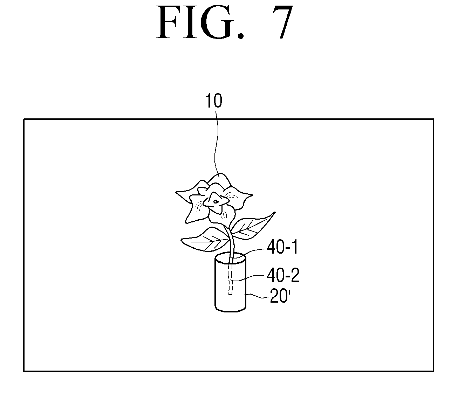

FIG. 7 illustrates a display screen showing a virtual object according to an embodiment. The controller 140 may display a virtual object regarding the overlapping areas 40-1, 40-2 of the real and virtual objects estimated in FIG. 6 based on comparative distances of real and virtual objects.

Specifically, the controller 140 may display the virtual object on an overlapping area if a distance of the virtual object is closer than the distance of the real object from position of a user, and may not display the virtual object if a distance of the virtual object is longer than the distance of the real object from a position of a user.

For instance, referring to FIG. 7, the controller 140 may display a flower on a transparent display because the flower as a virtual object is closer to position of a user than the flower vase as a real object in the overlapping area 40-1 among the overlapping areas 40-1, 40-2. In the overlapping area 40-2, because the flower as a virtual object is longer than the flower vase as a real object to conceal the flower as virtual, the controller 140 may not display the flower on a transparent display.

Meanwhile, the controller 140 may non-transparently display the virtual object on the transparent display 110 so as not to penetrate the real object at the back. Thus, a user can be provided with image having more reality.

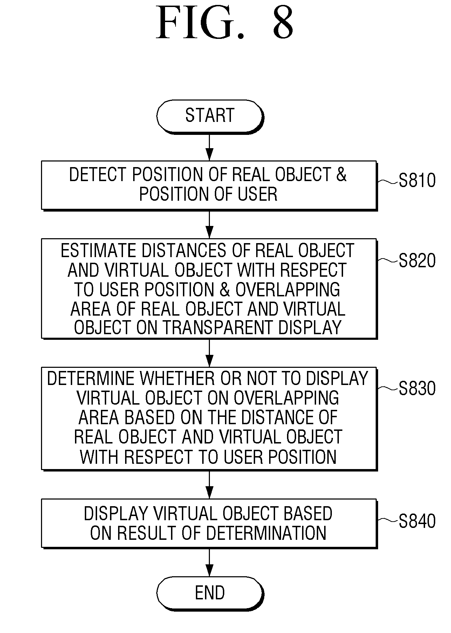

FIG. 8 is a flowchart explaining a method of controlling a transparent display apparatus according to an embodiment.

At S810, position of a real object placed in a first direction from a transparent display and position of a user placed in a second direction may be detected. Specifically, position of a user may be coordinate information of the user's eyes.

Distances of the real object and the virtual object regarding the position of the user and an overlapping area of the real and virtual objects on the transparent display from the position of the user may be estimated based on the detected position of a real object, the detected position of a user and predetermined position of the above virtual object at S820. Specifically, estimating an overlapping area of the real and virtual objects may include estimating an area penetrating the real object on the transparent display from the position of the user by using the user position and the real object position, estimating an area displaying the virtual object on the transparent display by using the user position and predetermined position of the virtual object, and estimating an overlapping area based on the area penetrating the real object and the area displaying the virtual object.

Based on distances of the real and virtual objects with respect to the user position, whether the virtual object is displayed on the overlapping area may be determined at S830. Specifically, if a distance of the virtual object toward the user position is closer than a distance of the real object toward the user position, the virtual object may be displayed on the overlapping area. If the distance of the virtual object toward the user position is longer than the distance of the real object toward the user position, the virtual object may not be displayed on the overlapping area. Based on determination results, the virtual object may be displayed at S840. The virtual object may be non-transparently displayed so as not to penetrate the real object on the transparent display. The virtual object displayed on the transparent display may be 3D virtual.

Meanwhile, the controlling method of the transparent display apparatus according to various embodiments may be implemented with programs that can be available on healthcare service providing apparatuses. These programs may be stored and used in various types of recording medium.

Specifically, codes to implement the above methods may be stored in various types of non-transitory recording medium such as a flash memory, the Read Only Memory (ROM), the Erasable Programmable ROM (EPROM), the Electronically Erasable and Programmable ROM (EEPROM), a hard disk, a removable disk, a memory card, a USB memory, and the CD-ROM.

The foregoing exemplary embodiments and advantages are merely exemplary and are not to be construed as limiting the present invention. The present teaching can be readily applied to other types of apparatuses. Also, the description of the exemplary embodiments of the present disclosure is intended to be illustrative, and not to limit the scope of the claims.

## Claims

1. A transparent display apparatus, comprising:
a transparent display arranged to display a virtual object having a predetermined position on a virtual dimensional area;
a first detector arranged to detect a position of a real object placed in a first direction from the transparent display;
a second detector arranged to detect a position of a user in a second direction from the transparent display; and
a controller arranged to estimate distances of the real object and the virtual object with respect to the position of the user, and an overlapping area of the real object and the virtual object on the transparent display with respect to the position of the user based on the detected position of the real object, the detected position of the user and the predetermined position of the virtual object,
wherein the controller is arranged to control the transparent display to display the virtual object on the overlapping area based on the distances of the real object and the virtual object regarding the position of the user.

2. The transparent display apparatus of claim 1, wherein the controller is arranged to display the virtual object on the overlapping area, if the distance of the virtual object regarding the position of the user is closer than the distance of the real object regarding the position of the user, and is arranged not to display the virtual object on the overlapping area, if the distance of the virtual object regarding the position of the user is longer than the distance of the real object regarding the position of the user.

3. The transparent display apparatus of claim 1 or 2, wherein the virtual object is displayed non-transparently so as not to penetrate the real object on the transparent display.

4. The transparent display apparatus according to any one of claims 1 to 3, wherein the controller is arranged to estimate an area that the real object penetrates and to show on the transparent display with respect to the position of the user by utilizing the position of the user and the position of the real object, to estimate an area in which the virtual object displays on the transparent display by utilizing the position of the user and the predetermined position of the virtual object, and to estimate the overlapping area.

5. The transparent display apparatus according to any one of claims 1 to 4, wherein the second detector is arranged to detect coordinate information of the user's eyes as the position of the user.

6. The transparent display apparatus according to any one of claims 1 to 5, wherein the virtual object displayed on the transparent display is a three-dimensional (3D) virtual object.

7. A method of controlling a transparent display apparatus displaying a virtual object having a predetermined position on a virtual dimensional area, the method comprising:
detecting a position of a real object placed in a first direction from the transparent display, and a position of a user in a second direction from the transparent display;
estimating distances of the real object and the virtual object with respect to the position of the user and an overlapping area of the real object and the virtual object on the transparent display from the position of the user based on the detected position of the real object, the detected position of the user and the predetermined position of the virtual object;
determining as to whether or not to display the virtual object on the overlapping area based on the distances of the real object and the virtual object with respect to the position of the user; and
displaying the virtual object based on the determination results.

8. The method of claim 7, wherein the determining comprises determining to display the virtual object on the overlapping area, if the distance of the virtual object regarding the position of the user is closer than the distance of the real object regarding the position of the user, and determining not to display the virtual object on the overlapping area, if the distance of the virtual object regarding the position of the user is longer than the distance of the real object regarding the position of the user.

9. The method of controlling claim 7 or 8, wherein the virtual object is displayed non-transparently so as not to penetrate the real object on the transparent display.

10. The method according to any one of claims 7 to 9, wherein the estimating the overlapping area of the real object and the virtual object comprises:
estimating an area in which the real object penetrates and shows on the transparent display from the position of the user by utilizing the position of the user and the position of the real object;
estimating an area in which the virtual object displays on the transparent display by utilizing the position of the user and predetermined position of the virtual object; and
estimating the overlapping area based on the area in which the real object penetrates and the area the virtual object is to be displayed.

11. The method according to any one of claims 7 to 10, wherein the detecting the position of the user comprises detecting coordinate information of user's eyes as the position of the user.

12. The method according to any one of claims 7 to 11, wherein the virtual object displayed on the transparent display is a three dimensional (3D) virtual object.
